(19) Europäisches Patentamt
European Patent Office
Office européen des brevets

(11) **EP 1 589 057 A2**

(12) **EUROPEAN PATENT APPLICATION**

(43) Date of publication:
**26.10.2005 Bulletin 2005/43**

(51) Int Cl.[7]: **C08G 81/00**, C08G 75/23, B01D 71/68

(21) Application number: **05106579.5**

(22) Date of filing: **18.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.07.2004 US 589847 P**

(71) Applicant: **Solvay Advanced Polymers, LLC
Alpharetta, GA 30005 (US)**

(72) Inventor: **SCHWAB, Thomas H.
Cumming, GA Georgia 30040 (US)**

(74) Representative: **Jacques, Philippe et al
Solvay S.A.
Département de la Propriété Industrielle,
Rue de Ransbeek, 310
1120 Bruxelles (BE)**

(54) **Block copolymer, process to synthesize it, composition and article made therefrom**

(57) Block copolymer comprising:

- at least one block of a polymer comprising at least 50 mole % of recurring units (R1) formed by the polycondensation reaction between at least one aromatic dihalocompound comprising at least one $-S(=O)_2-$ group and at least two aromatic rings, and at least two aromatic diols, at least one aromatic diol (D1) comprising only one aromatic ring and at least one other aromatic diol (D2) comprising at least two aromatic rings [block (A)], and
- at least one block of a polymer comprising at least 50 mole % of recurring units (R2) formed by the polyaddition of at least one alkylene oxide [block (B)].

Process to synthesize said block copolymer.

Polymer composition comprising said block copolymer.

Article, in particular membrane, comprising said block copolymer or said polymer composition.

Use of said membrane for purifying a liquid.

EP 1 589 057 A2

## Description

The present invention relates to new polyarylethersulfones-polyalkylene glycol block copolymers which exhibit several properties at a very high level. Polyethersulfones (namely polyarylethersulfones the recurring units of which are -Phi-S(=O)$_2$-Phi-O-, wherein Phi denotes a p-phenylene group), are polymers of particular interest. They are used notably in the manufacture of hollow fiber membranes (which operate in the microfiltration range and the ultrafiltration range) due to their easy processability and their ability to produce membranes having a wide range of pore structures. Moreover, they possess a good thermal stability. However, polyethersulfones are hydrophobic polymers and their applications in microfiltration and, to a larger extent, in ultrafiltration are somewhat limited by the difficulties encountered in wetting the membranes.

At the high pressures required to wet some ultrafiltration membranes, compression of the membranes may lead to an irreversible collapse of the pore structure and a loss of hydraulic permeability. Hydrophobic membranes like polyethersulfone membranes are also prone to non-specific protein adsorption by virtue of their large hydrophobic surfaces. In pharmaceutical and therapeutic applications (such as for instance in hemodialysis membranes), this may lead to rapid blockage of the pore diameters and fouling of the membrane.

An obvious solution to the above problem with hydrophobic polymers is to use hydrophilic polymers as membrane forming materials. However, such hydrophilic polymers, like cellulose, are limited in their use due to their poor chemical resistance, poor hydrolytic stability, poor thermal resistance and lack of processability.

Several efforts have already been made to modify the hydrophobic properties of membranes made from polyethersulfones. These have included chemical modifications of pre-formed membranes, and the use of hydrophilic polymers as additives in the membrane forming process. Examples of chemically modified preformed membranes include plasma treatment of the membranes to introduce hydrophilic groups on the surface, deposition of thin coatings of hydrophilic polymers on the surface of the hydrophobic membranes and the addition of hydrophilic polymers to the cast solution ; such chemical modifications are usually complex, expensive and of limited efficiency.

As an alternative, a wide range of hydrophilic polymers have been used as additives in polyethersulfone membrane formation : water soluble polymers, such as polyethylene glycol and polyvinyl pyrrolidone, have been successfully used as pore formers in the manufacture of porous polyethersulfone membranes. Examples of preparing hydrophilic membranes by using hydrophilic polymers in the casting solution as additives include the use of polyvinyl pyrrolidone as described in U.S. Pat. No. 4,051,300 to Klein et al., and the use of polyethylene glycols as described in Japanese Patent No. 54-26283 and U.S. Pat.
No. 4,900,449 to Kraus et al. Unfortunately, only part of the hydrophilic water soluble additive is retained in the membrane ; further, the initially retained fraction usually leaches out on prolonged use in aqueous environments, resulting in a progressive degradation of the benefitial properties provided by the hydrophilic additive.

To cope with the requirements of chemical resistance, hydrolytic stability and thermal resistance, it has also been taught to use block copolymers comprising a hydrophilic block and a hydrophobic block. Unlike prior art additives such as polyvinyl pyrrolidone and polyethylene glycol that are added to the hydrophobic-base polymer as pore formers, the block copolymer comprises chemically bound recurring units which impart the required hydrophilicity and which are not extracted during separation or cleaning operations. Thus, U.S. 5,911,880 discloses polyarylethersulfone-polyethylene glycol block copolymers such as polyethersulfone polyethylene glycol block copolymers, to be used as additives in admixture with polyethersulfone for the manufacture of water wettable permselective membranes for use in hemodialysis, ultrafiltration and microfiltration application. US 6,365,678 discloses a trans-etherification process for the production of polyarylethersulfone-polyalkylene glycol block copolymers, such as polyethersulfone-polyalkylene glycol block copolymers.

The polyethersulfone-polyalkylene glycol block copolymers of the prior art suffer from several drawbacks. In particular, while polyethersulfone-polyalkylene glycol block copolymers offer good hydrolytic stability and good thermal resistance, their chemical resistance may still be unsatisfactory in some demanding applications wherein shaped articles, in particular membranes, made from the polyethersulfone-polyalkylene glycol block copolymers are in contact with some chemically aggressive fluids. Typical examples thereof are separation membranes used in certain chemical processes as well as purification membranes used to purify certain plant aqueous effluents, especially when the chemically aggressive fluid is a liquid chlorinated compound.

While some other prior art polyarylethersulfone-polyalkylene glycol block copolymers such as polyphenylsulfone-polyalkylene glycol block copolymers (asdescribed in US 6,365,678) and

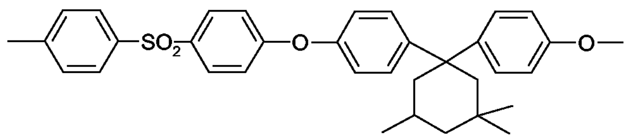

- polyalkylene glycol block copolymers (as described in US 5,861,471) might possibly offer a somewhat higher chemical resistance in certain chemically aggressive fluids, the prior art (as far as the Applicant is aware of) seems to keep silent about this and, whatever the chemical resistance of said polymers is, these ones are sometimes disliked because their polyarylethersulfone blocks need to be produced from more expensive difficult-to-synthesize sulfone dihydroxy monomers.

In view of all the above, there is still a need for a polymer or a composition of matter having a higher chemical resistance against aggressive fluids than polyethersulfone-polyalkylene glycol block copolymers, in particular a higher chemical resistance against liquid chlorinated compounds, while maintaining all the benefitial properties and other advantages of the polyethersulfone-polyalkylene glycol block copolymers, including easiness to produce at an industrial scale and moderate cost.

To this end, the present invention concerns a block copolymer comprising :

- at least one block of a polymer comprising at least 50 mole % of recurring units (R1) formed by the polycondensation reaction between at least one aromatic dihalocompound comprising at least one $-S(=O)_2-$ group and at least two aromatic rings, and at least two aromatic diols, at least one aromatic diol (D1) comprising only one aromatic ring and at least one other aromatic diol (D2) comprising at least two aromatic rings [block (A)], and
- at least one block of a polymer comprising at least 50 mole % of recurring units (R2) formed by the polyaddition of at least one alkylene oxide [block (B)].

Each recurring unit (R1), taken apart, can be formed by the condensation reaction between one molecule of a dihalocompound comprising at least one $-S(=O)_2-$ group and one molecule of an aromatic diol (D1) or (D2), so the number of distinct varieties of recurring units (R1) can be as high as the number of dihalocompounds times the sum of the number of aromatic diols (D1) and (D2) involved in the polycondensation reaction.

Each recurring unit (R2), taken apart, can be formed by the addition reaction of one alkylene oxide to the polymer, and the number of distinct varieties of recurring units (R2) is equal to the number of alkylene oxides involved in the polyaddition reaction.

Non limitative examples of encompassed structures are :

(i) (A)-$\{(B)-(A)\}_{n1}$ wherein $n_1$ is an integer equal to 1,2,3,4, 5, 6, 7, 8, 9, 10 or more ;
(ii) (B)-$\{(A)-(B)\}_{n2}$ wherein $n_2$ is an integer equal to 1,2,3,4, 5, 6, 7, 8, 9, 10 or more ;
(iii)

(A)-(B)-(A).
|
(A)

No block other than blocks (A) and (B) are usually contained in the block copolymer.

Blocks (B) are advantageously found between two blocks (A). Blocks (B), especially when they are incorporated into the block copolymer, provide advantageously long-term hydrophilicity and biocompatibility to the block copolymer.

Besides, blocks (B) are advantageously linked to blocks (A) by links consisting of the residues of a molecule of the aromatic dihalocompound, e.g. as in the following structures : (A)-$\{O-(B)-ç-(A)\}_{n1}$, wherein O and ç are the residues (O is an oxygen atom) and $n_1$ is an integer equal to 1,2,3,4, 5, 6, 7, 8, 9, 10 or more ; more particularly, when the aromatic dihalocompound is a 4,4'-dihalodiphenylsulfone, certain structures of interest are (A)-$\{O-(B)-\rho-(A)\}_{n1}$ wherein $n_1$ is an integer equal to 1,2,3,4, 5, 6, 7, 8, 9, 10 or more, wherein ρ is $-Phi-SO_2-Phi-$, Phi denoting a p-phenylene group ; the structure (A)-O-(B)-ρ-(A) (corresponding to $n_1$=1) is of particular interest.

The number of blocks (A) is preferably at most two ; more preferably, it is equal to two.

The number of blocks (B) is preferably at most two ; more preferably, it is equal to one.

Blocks (A) comprise preferably at least 90 mole % of recurring units (R1). More preferably, blocks (A) consist

of recurring units (R1).

Any aromatic dihalocompound which comprises at least one $—S(=O)_2—$ group and at least two aromatic rings, and which is able to polymerize with the aromatic diol is suitable ; examples of aromatic dihalocompounds suitable to the purpose of the present invention are notably dihalobenzene disulfone compounds of the general formula

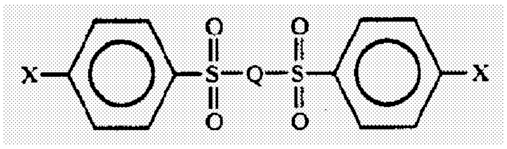

wherein X is a halogen, especially Cl, and Q is a divalent radical susceptible of resulting from the removal of two replaceable hydrogens from a molecule of formula $QH_2$, such as :

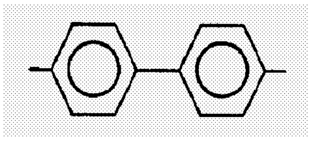

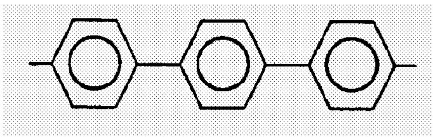

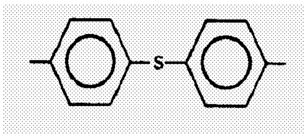

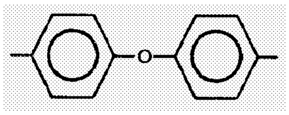

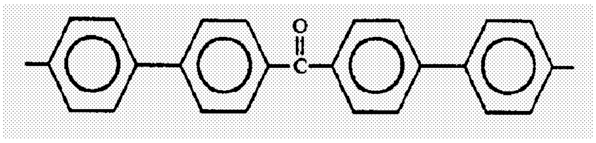

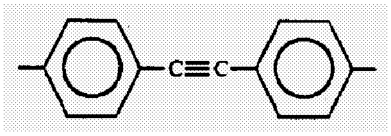

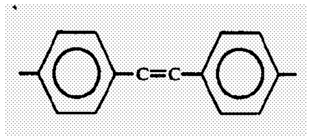

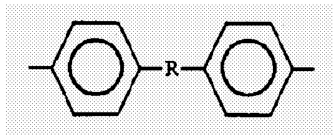

in which R is an aliphatic divalent group of up to 6 carbon atoms such as a methylene, ethylene or isopropylene and the like. Other aromatic dihalocompounds suitable to the purpose of the present invention are 4,4'-dihalodiphenylsulfones.

The aromatic dihalocompound comprises advantageously at most four $-S(=O)_2-$ groups, preferably at most two $-S(=O)_2-$ groups and more preferably at most one $-S(=O)_2-$ group.

The aromatic dihalocompound comprises advantageously at most six, preferably at most four aromatic rings, and still more preferably at most two aromatic rings.

Most preferred aromatic dihalocompounds are 4,4'-dihalodiphenylsulfones.

Any aromatic diol which is able to polymerize with the aromatic dihalocompound is suitable to be used as aromatic diol (D1) or (D2). Non limitative examples of such aromatic diols are 4,4'-biphenol (i.e. 4,4'-dihydroxybiphenyl), bisphenol A, 4,4'-dihydroxy-diphenylsulfone (also known as bisphenol S), hydroquinone, and 4,4'-dihydroxy-diphenylether.

Aromatic diols (D1) and (D2) are advantageously free from functional groups other than -OH groups.

Aromatic diol (D1) is preferably hydroquinone or an optionally alkyl-substituted hydroquinone. Aromatic diol (D1) is very preferably hydroquinone.

Aromatic diol (D2) comprises advantageously at most two aromatic rings. Aromatic diol (D2) is preferably chosen from 4,4'-biphenol, bisphenol A, 4,4'-dihydroxy-diphenylsulfone and 4,4'-dihydroxy-diphenylether. Aromatic diol (D2) is more preferably 4,4'-dihydroxy-diphenylsulfone.

The molar fraction of aromatic diol (D1), i.e. the number of moles of aromatic diol (D1) based on the total number of moles of aromatic diol [i.e. aromatic diol (D1) + aromatic diol (D2)], is advantageously above 0.05, preferably above 0.10, more preferably at least 0.20 and still more preferably above 0.20. In addition, the mole fraction of aromatic diol (D1) is advantageously below 0.50, preferably below 0.40, more preferably at most 0.30 and still more preferably below 0.30.

The weight of aromatic diol (D1), based on the total weight of aromatic diol [i.e. aromatic diol (D1) + aromatic diol (D2)], is advantageously above 2 %, preferably above 5 % and more preferably above 10 %. In addition, the weight of aromatic diol (D1), based on the total weight of aromatic diol [i.e. aromatic diol (D1) + aromatic diol (D2)], is advantageously below 25 %, preferably below 20 % and more preferably below 15 %.

Blocks (A) comprising at least 90 mole % of recurring units formed by the polycondensation reaction between a 4,4'-dihalodiphenylsulfone (especially 4,4'-dichlorodiphenylsulfone), hydroquinone and 4,4'-dihydroxy-diphenylsulfone, with a molar fraction of hydroquinone (i.e. with a number of moles of hydroquinone based on the total number of moles of hydroquinone and 4,4'-dihydroxy-diphenylsulfone) between 0.10 and 0.50 [hereafter blocks (A**)], gave good results.

Blocks (A) consisting of recurring units formed by the polycondensation reaction between a 4,4'-dihalodiphenylsulfone (especially 4,4'-dichlorodiphenylsulfone), hydroquinone and 4,4'-dihydroxy-diphenylsulfone, with a molar fraction of hydroquinone (i.e. with a number of moles of hydroquinone based on the total number of moles of hydroquinone and 4,4'-dihydroxy-diphenylsulfone) from 0.20 to 0.30, in particular equal to about 0.25 [hereafter blocks (A*)], gave excellent results.

In block (A*), each recurring unit, taken apart, can be formed either by the condensation reaction between one molecule of a 4,4'-dihalodiphenylsulfone and one molecule of hydroquinone [recurring unit of variety ($a_1$*)], or by the condensation reaction between one molecule of a 4,4'-dihalodiphenylsulfone and one molecule of 4,4'-dihydroxy-diphenylsulfone [recurring unit of variety ($a_2$*)] ; in addition, in block (A*), the number of recurring units of variety ($a_1$*), based on the total number of recurring units, ranges from 0.20 to 0.30.

In block (A*), the recurring units of variety ($a_1$*) and the recurring units of variety ($a_2$*) are advantageously

randomly distributed.

The block copolymer comprises advantageously at least 50 wt. % of block (A). In addition, the block copolymer comprises advantageously at most 90 wt. % of block (A). In particular, the block copolymer comprises from 50 wt. % to 90 wt. % of block (A). Very particularly, the block copolymer comprises, as sole blocks, at least one block (A) and at least one block (B), in an amount of from 50 to 90 wt. % of block (A) and from 50 to 10 wt. % of block (B).

Blocks (B) comprise preferably at least 90 mole % of recurring units (R2). More preferably, blocks (B) consist of recurring units (R2).

The alkylene oxide is preferably ethylene oxide and/or propylene oxide. More preferably, the alkylene oxide is ethylene oxide.

Blocks (B) has a number average molecular weight of advantageously at least 500, and preferably at least 5,000. In addition, blocks (B) have a number average molecular weight of advantageously at most 20,000, and preferably at most 12,000.

The block copolymer comprises advantageously at most 50 wt. % of block (B). In addition, the block copolymer comprises advantageously at least 10 wt. % of block (B). In particular, the block copolymer comprises from 10 to 50 wt. % of block (B).

Certain preferred block copolymers comprise at least 10 wt. % and up to 15 wt. % of block (B). Such block copolymers are notably suitable for manufacturing water and gas separation membranes with a low hydrophilicity level.

Certain other preferred block copolymers comprise more than 15 wt. % and up to 25 wt. % of block (B).

Certain other preferred block copolymers comprise more than 25 wt. % and up to 35 wt. % of block (B).

Certain other preferred block copolymers consists of block copolymers comprise more than 35 wt. % and up to 45 wt. % of block (B).

Good results were obtained with triblock copolymers with two blocks (A) and one block (B) in-between, said block (B) being linked to blocks (A) by links consisting of the residues of a molecule of the aromatic dihalocompound, wherein :

- block (A) is block (A**) as above described;
- block (B) is $-(-CH_2—CH_2O-)-_n$ or $-(-CH_2—CH_2—CH_2O-)-_n$ or a mixture thereof (n being an integer > 0), and has a number average molecular weight from 500 to 20,000.

Excellent results were obtained with triblock (A)-O-(B)-ρ-(A) copolymers, in which :

- block (A) is block (A*) as above described;
- block (B) is $-(-CH_2-CH_2O-)-_n$ (n being an integer > 0) and has a number average molecular weight from 5,000 to 12,000, preferably from 8,000 to 10,000 ;
- ρ is $—Phi—SO_2—Phi—$, Phi is p-phenylene.

The block copolymer according to the present invention exhibits excellent chemical resistance, excellent hydrolytic stability and excellent thermal performance.

The present invention concerns also a process for synthesizing the above described block copolymer, wherein :

- block (A) is synthesized by nucleophilic displacement chemistry in an aprotic polymerization solvent, such as sulfolane, diphenylsulfone or N-methyl-pyrrolidone ;
- block (B) is incorporated into block (A) by transetherification.

The present invention concerns also a process for synthesizing the above described block copolymer, wherein pre-formed blocks (A) and (B) are reacted in the presence of a carbonate, in particular potassium carbonate, in an aprotic polymerization solvent, such as sulfolane, diphenylsulfone or N-methylpyrrolidone.

The present invention concerns also a polymer composition comprising the block copolymer as above described, and at least one other ingredient. Said other ingredient can be a polymer of the same type as block (A). It can also be notably another sulfone polymer such as a polysulfone or a polyphenylsulfone. It can also be a polymer other than a sulfone polymer such as polyvinyl pyrrolidone. It can also be a non polymeric ingredient such as a solvent.

An example of such polymer composition is a dope solution suitable for hollow fiber spinning consisting of a triblock copolymer (A)-O-(B)-ρ-(A) copolymer as above illustrated, e.g. with (A):(B) = 80:20, polyvinylpyrrolidone and a spinning solvent.

The block copolymer of the composition according to the present invention has the same characteristics as the block copolymer according to the present invention, in all its embodiments, as above detailed.

The polymer composition comprise advantageously more than 1 wt. %, preferably more than 10 wt. %, still

more preferably more than 50 wt. %, and the most preferably more than 90 wt. %, related to the total weight of the composition, of the block copolymer.

The invention concerns also an article comprising the block copolymer as above described or the polymer composition as above described.

The block copolymer and the polymer composition comprised in the article according to the present invention have the same characteristics respectively as the block copolymer and the polymer composition according to the present invention, in all their embodiments, as above detailed.

The article is advantageously a membrane. Non limitative examples thereof include separation membranes used in certain chemical processes as well as purification membranes used to purify certain plant aqueous effluents, especially when the chemically aggressive fluid is a liquid chlorinated compound.

In certain embodiments of the present invention, the membrane is in contact with a liquid comprising a liquid chlorinated compound.

The invention concerns also a process for purifying a liquid, preferably impure water or blood, which comprises using a membrane as above described.

The membrane used in the processes according to the present invention has the same characteristics as the membrane according to the present invention, in all its embodiments, as above detailed.

Example 1 (preparation of a block copolymer according to the invention).

A one-liter, 4-neck resin kettle with Kalrez o-ring was equipped through its center neck with an overhead stirrer attached to a stainless steel anchor-type agitator. A Claisen adapter fitted with a Barrett trap and a refrigerated water-cooled Graham condenser was attached to a side neck, and a thermocouple thermometer attached to a temperature controller was inserted into the reactor through the Claisen adapter. A gas inlet tube and a stopper were placed in the other necks of the resin kettle. The reactor was placed in an oil bath, filled with Dow Coming 550 heat transfer fluid, and fitted with heaters connected to a temperature controller.

4,4'-dihydroxydiphenyl sulfone (50.70 pbw), hydroquinone (7.44 pbw), 4,4'-dichlorodiphenyl sulfone (78.61 pbw), nominal Mw = 8000 g/mole polyethylene glycol (29.00 pbw), and anhydrous potassium carbonate of average particle size less than 80 µm (39.34 pbw) were charged to the reactor. The agitator was started at 50 rpm and the reactor was degassed by evacuating using a vacuum pump and then filling with nitrogen. The degassing operation was repeated two more times. Anhydrous sulfolane (269.29 pbw) and monochlorobenzene (89.76 pbw) were then charged to the reactor. The agitator speed was increased to 100 rpm and a steady stream of nitrogen through the reactor solution was started. After approximately 15 minutes of nitrogen sparging, heating was initiated and the stirring speed increased to 150-200 rpm, taking care not to splash the reactor solution above the heated zone of the reactor wall. As the temperature of the reaction mixture increased, monochlorobenzene, along with the water formed as a reaction by-product, distilled as an azeotrope and was collected in the Barrett trap. The collected distillate was not returned to the resin kettle. When the viscosity started to build, the agitator speed was increased to 450-500 rpm.

The predetermined reaction temperature, here 225°C, was attained within about 70 minutes after initiating the heating cycle, and was maintained for the time needed to reach the target molecular weight, namely about 6 hours (the Applicant observed that shorter or longer reaction times were required for particular other combinations of monomers and reactants, and when other reactant stoichiometries were used). The solution viscosity of the reaction mass increased as the polymerization proceeds, thereby increasing the load on the agitator motor to maintain a fixed speed of rotation. The progress of the polymerization reaction was thus be followed by monitoring the corresponding increase in load on the agitator motor circuit. A polymer having the desired molecular weight was obtained; the concentration of the polymer in the sulfolane was 35 wt. %.

Then, the polymerization process was quenched by adding 493.00 pbw monochlorobenzene and 59.38 pbw sulfolane slowly from an addition funnel to cool the reaction mixture, typically to 100-120°C ; heat input to the resin kettle was terminated. The diluted polymer solution comprised 145.00 pbw (theoretical yield) of dissolved polymer at a concentration of approximately 15 wt. %, together with suspended by-product salts ; in said dilute solution, the weight ratio monochlorobenzene : sulfolane was about 1.5 : 1.0. The reactor solution was then filtered to remove the by-product salts. Filtration was accomplished using a 2-2.7 µm filter medium in a stainless steel pressure filter operated at 90-100 psig nitrogen pressure.

After salt removal, the polymer solution at about 40°C, was acidified to pH = 3 with oxalic acid. The polymer was then coagulated by slowly adding 100 pbw of the 15 wt. % cooled solution to 400 pbw of methanol in a blender under high speed agitation. The precipitate was recovered by vacuum filtration, returned to the blender, and given an additional washing using 400 pbw methanol. The washed precipitate was then slurried for two hours at about 35°C under mechanical agitation in 500 pbw deionized water acidified with oxalic acid to pH = 3. The washed precipitate is recovered by vacuum filtration and then dried in a vacuum oven (about 27 in Hg) at about 110°C, with an air-bleed.

The block copolymer exhibited a relative viscosity (RV) equal to 0.86 dl/g with 20 wt. % polyethylene oxide incorporated into the polymer backbone. The glass transition temperature of the block copolymer was 159.0°C. The block copolymer exhibited an A-B-A tri-block structure with no aliphatic end-groups arising from polyethylene oxide.

The block copolymer prepared in this example was subjected to two steam sterilization cycles carried out at 120°C and 19 psig steam pressure for 30 minutes per cycle. The reduced viscosities of the block copolymer after steam sterilization were 0.67 dl/g and 0.62 dl/g, respectively.

Examples 2a and 2b (according to the invention). Same as example 1, but the polymerizations were conducted using a molar excess of potassium carbonate of respectively 2 % and 5%.

Examples 3a and 3b (according to the invention). Same as example 1, but the amount of the nominal Mw = 8000 g/mole polyethylene glycol was adjusted so as to obtain block copolymers with respectively 10 wt % and 30 wt. % polyethylene oxide incorporated into the polymer backbone. The block copolymers exhibited an A-B-A tri-block structure with no aliphatic end-groups arising from polyethylene oxide.

Example 4 (according to the invention). Same as example 1, but the amount of the nominal Mw = 8000 g/mole polyethylene glycol was adjusted so as to obtain a block copolymer with about 15 wt. % (= target value) polyethylene oxide incorporated into the polymer backbone.

The so-produced block copolymer exhibited a relative viscosity (RV) equal to 0.71 dl/g with 15.6 wt. % polyethylene oxide incorporated into the polymer backbone. It exhibited an A-B-A tri-block structure with no aliphatic end-groups arising from polyethylene oxide.

The block copolymer prepared in this example was subjected to two steam sterilization cycles carried out at 120°C and 19 psig steam pressure for 30 minutes per cycle. The reduced viscosities of the block copolymer after steam sterilization were 0.64 dl/g and 0.59 dl/g respectively.

The chemical resistance of the so-produced copolymer was tested in toluene, in a toluene-heptane (50:50) mixture, in methylene chloride, in trichloroethylene, in 1,1,1-trichloroethane and in isopropanol. In any case, it exhibited a good chemical resistance.

Comparative example. Same as example 4, but hydroquinone was totally substituted by an equivalent molar amount of 4,4'-dihydroxydiphenyl sulfone. Thus, a polyethersulfone-polyethylene glycol block copolymer was obtained.

The so-produced polyethersulfone-polyethylene glycol block copolymer block copolymer exhibited a relative viscosity (RV) equal to 0.71 dl/g with 16.1 wt. % polyethylene oxide incorporated into the polymer backbone. It exhibited an A-B-A tri-block structure with no aliphatic end-groups arising from polyethylene oxide.

The polyethersulfone-polyethylene glycol block copolymer prepared in this example was subjected to two steam sterilization cycles carried out at 120°C and 19 psig steam pressure for 30 minutes per cycle. The reduced viscosities of the block copolymer after steam sterilization were 0.55 dl/g and 0.49 dl/g respectively.

The chemical resistance of the so-produced polyethersulfone-polyethylene glycol copolymer was tested in toluene, in a toluene-heptane (50:50) mixture, in methylene chloride, in trichloroethylene, in 1,1,1-trichloroethane and in isopropanol, in exactly the same conditions as those used for the block copolymer of example 4 (according to the invention). It exhibited a medium chemical resistance. Said chemical resistance was not as good as the chemical resistance exhibited by the block copolymer according to example 4, especially for the tests in the presence of liquid chlorinated compounds.

## Claims

**1.** Block copolymer comprising :

- at least one block of a polymer comprising at least 50 mole % of recurring units (R1) formed by the polycondensation reaction between at least one aromatic dihalocompound comprising at least one $-S(=O)_2-$ group and at least two aromatic rings, and at least two aromatic diols, at least one aromatic diol (D1) comprising only one aromatic ring and at least one other aromatic diol (D2) comprising at least two aromatic rings [block (A)], and
- at least one block of a polymer comprising at least 50 mole % of recurring units (R2) formed by the polyaddition of at least one alkylene oxide [block (B)].

**2.** Block copolymer according to claim 1, **characterized in that** it comprises, as sole blocks, at least one block (A) and at least one block (B), in an amount of from 50 to 90 wt. % of block (A) and from 50 to 10 wt. % of block (B).

**3.** Block copolymer according to claim 1 or 2, **characterized in that** it is a triblock copolymer with two blocks (A) and one block (B) in-between, said block (B) being linked to blocks (A) by links consisting of the residues of a molecule of the aromatic dihalocompound, wherein :

- block (A) is a block comprising at least 90 mole % of recurring units formed by the polycondensation reaction

between a 4,4'-dihalodiphenylsulfone, hydroquinone and 4,4'-dihydroxy-diphenylsulfone, with a molar fraction of hydroquinone between 0.10 and 0.50 ;

- block (B) is $-(-CH_2-CH_2O-)-_n$ or $-(-CH_2-CH_2-CH_2O-)-_n$ or a mixture thereof (n being an integer > 0), and has a number average molecular weight from 500 to 20,000.

**4.** Block copolymer according to claim 1 or 2, **characterized in that** it is a triblock (A)-O-(B)-ρ-(A) copolymer, in which :

- block (A) is a block consisting of recurring units formed by the polycondensation reaction between a 4,4'-dihalodiphenylsulfone, hydroquinone and 4,4'-dihydroxy-diphenylsulfone, with a molar fraction of hydroquinone from 0.20 to 0.30, in particular with a molar fraction of hydroquinone equal to about 0.25 ;

- block (B) is $-(-CH_2-CH_2O-)-_n$ (n being an integer > 0) and has a number average molecular weight from 5,000 to 12,000 ;

- ρ is $-Phi-SO_2-Phi-$, Phi is p-phenylene.

**5.** Process for synthesizing the block copolymer according to anyone of the preceding claims, **characterized in that** :

- block (A) is synthesized by nucleophilic displacement chemistry in an aprotic polymerization solvent ;

- block (B) is incorporated into block (A) by transetherification.

**6.** Polymer composition comprising the block copolymer according to anyone of claims 1 to 4, and at least one other ingredient.

**7.** Article comprising the block copolymer according to anyone of claims 1 to 4 or the polymer composition according to claim 6.

**8.** Article according to claim 7, **characterized in that** it is a membrane.

**9.** Article according to claim 8, **characterized in that** the membrane is in contact with a liquid comprising a liquid chlorinated compound.

**10.** Process for purifying a liquid, **characterized in that** it comprises using the article according to claim 8 or 9.